(19) Europäisches Patentamt
European Patent Office
Office européen des brevets

(11) EP 2 005 022 B1

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **07724035.6**

(22) Anmeldetag: **05.04.2007**

(51) Int Cl.:
**F16D 65/14** *(2006.01)* **F16D 65/60** *(2006.01)*

(86) Internationale Anmeldenummer:
**PCT/EP2007/003094**

(87) Internationale Veröffentlichungsnummer:
**WO 2007/115788 (18.10.2007 Gazette 2007/42)**

(54) **BREMSVORRICHTUNG MIT ELASTISCHEM ENERGIESPEICHER**

BRAKE DEVICE COMPRISING AN ELASTIC ENERGY ACCUMULATOR

DISPOSITIF DE FREINAGE COMPRENANT UN ACCUMULATEUR D'ÉNERGIE ÉLASTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.04.2006 DE 102006016316**
**27.10.2006 DE 102006050804**

(43) Veröffentlichungstag der Anmeldung:
**24.12.2008 Patentblatt 2008/52**

(73) Patentinhaber: **KNORR-BREMSE Systeme für Nutzfahrzeuge GmbH**
**80809 München (DE)**

(72) Erfinder:
• **BAUMGARTNER, Johann**
**85368 Moosburg (DE)**
• **PERICEVIC, Aleksandar**
**80636 München (DE)**

(74) Vertreter: **Mattusch, Gundula**
**Knorr-Bremse AG,**
**Patentabteilung V/RG**
**Moosacher Strasse 80**
**80809 München (DE)**

(56) Entgegenhaltungen:
**EP-A1- 0 094 262 DE-A1- 4 330 440**
**DE-A1- 10 140 075 DE-A1- 10 161 500**
**FR-A1- 2 548 309 FR-A1- 2 626 049**

**Beschreibung**

Die Erfindung betrifft eine Bremsvorrichtung, insbesondere eine Scheibenbremse, nach dem Oberbegriff des Anspruchs 1.

Aus dem Stand der Technik sind Bremsvorrichtungen verschiedenster Art bekannt, so auch Fahrzeugbremsen mit einem elastischen Energiespeicher - typischerweise ein Federspeicher - bei welchen durch eine Anpassung des Kraftübersetzungsverhältnisses im Bereich der möglichen Spannkräfte der Bremse ein Gleichgewicht zwischen dem Energiespeicher und dem aufzuspreizenden Bremsmechanismus gehalten wird.

Derartige Lösungen wurden z.B. in der WO 01/44 677 A1 und der WO 03/ 016745 A2 aufgegriffen.

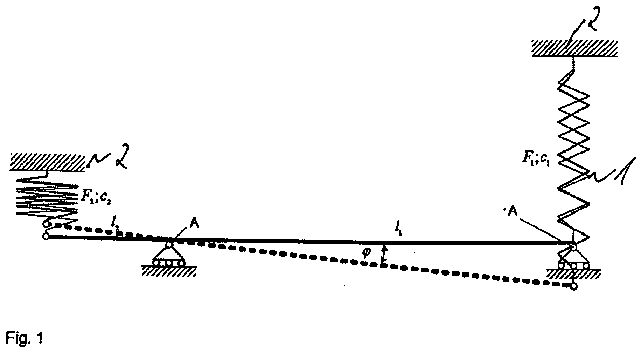

Eine Prinzipdarstellung eines derartigen Standes der Technik zeigt Fig.1.

Nach dieser Konstruktion stellt sich in jeder Position eines verschieblichen Widerlagers "A" durch Entspannen bzw. Spannen der Federelastizitäten von Energiespeicher (Hebelarm $l_1$) und Bremssattel (Hebelarm $l_2$) entsprechend dem Verhältnis der Hebelarmlängen $l_1$ und $l_2$ sowie der Federsteifigkeiten $c_1$ und $c_2$ ein stabiler Gleichgewichtszustand zwischen Energiespeicher und Bremssattel ein.

Durch ein Verschieben der Position des Widerlagers "A" kann somit die Spannkraft der Bremse in den gegebenen Grenzen variiert werden.

Den Lösungen des Standes der Technik ist gemeinsam, dass ein in der Position verstellbares Widerlager benötigt wird, um den jeweils veränderten Gleichgewichtszustand einzustellen.

Der Verstellvorgang ist dabei mit einem nicht zu vernachlässigendem Energieaufwand verbunden da, je nach Einfederungszustand der Energie abgebenden bzw. aufnehmenden Elemente, auf den Verstellmechanismus des Widerlagers der Verstellbewegung entgegen gerichtete Kräfte auftreten:

$$F_A = (F_1 + F_2) \cdot \sin\varphi$$

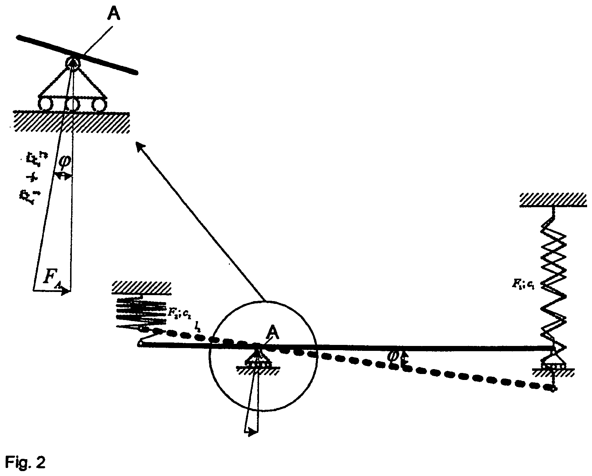

Hinzu kommen noch die im Verstellmechanismus auftretenden Reibungsverluste (siehe das Prinzipbild der Fig. 2).

Ein weiteres Problem der bekannten Lösungen besteht darin, dass keine Maßnahmen zur Anpassung der Kraftübersetzungsverhältnisse an die verschleißbedingt veränderlichen Federsteifigkeiten des Bremsmechanismus vorgesehen sind.

Insbesondere bei Scheibenbremsen wird die Gesamtsteifigkeit des Bremsmechanismus aus Bremssattel, Bremsbelägen und Bremsscheibe aber wesentlich durch die relativ weichen Bremsbeläge beeinflusst.

Da das Belagmaterial im Betrieb von einer maximalen Dicke im Neuzustand bis auf nahezu Null abgenutzt wird, ergibt sich eine starke verschleißabhängige Veränderung der Gesamtsteifigkeit dieser Anordnung

Es gilt:

$$\frac{1}{c_{ges}} = \frac{1}{c_{Sattel}} + \frac{1}{c_{Belag}} + \frac{1}{c_{Scheibe}}$$

Der Betrag von $c_{ges}$ kann infolge der verschleißabhängigen Kompressibilität der Bremsbeläge etwa in einem Verhältnis von

$$\frac{c_{ges.max}}{c_{ges.min}} = 2$$

variieren.

Die starke Streuung des $c_{ges}$-Wertes führt dazu, dass in den Extremzuständen "Belag neu" und / oder "Belag verschlissen" der Energieausgleich zwischen dem Energiespeicher und dem Bremssattel so verstimmt wird, dass die mögliche Energieeinsparung nur noch zu einem geringen Anteil genutzt wird, d.h. es ist eine erhebliche Leistungsaufnahme der Bremse erforderlich, was eine entsprechend großen Dimensionierung des elektrischen Antriebsmotors und der nachgeschalteten Antriebselemente erforderlich macht.

Das Dokument EP-A1-0 094 262 beschreibt eine Bremse mit automatischer Verschleißnachstellung. Eine Nockenscheibe wirkt durch Verschwenkung um eine Achse in Bezug auf ein Bremsgehäuse mit Hebeln zusammen, welche Bremsbeläge tragen. Die Nockenscheibe ist mit einer Antriebseinrichtung über eine erste Freilaufeinrichtung verbunden, welche eine Blockierung bewirkt, wenn die Antriebseinrichtung eine Zuspannung der Bremse bewirkt. Die Nockenscheibe ist weiterhin mittels einer zweiten Freilaufeinrichtung mit dem Bremsgehäuse verbunden, wobei eine Blockierung im gegenläufigen Sinn erfolgt und wobei deren Winkelverlauf einer Momentübertragung den maximalen Weg der Bremsbeläge beim Lösen der Bremse festlegt. Eine Speicherfeder aus mehreren Tellerfederelementen mit elektromagnetischer Betätigung ist gezeigt. Eine Anwendung erfolgt bei Sicherheitsscheibenbremsen und durch elektromagnetische Steuerung bei Verriegelung im Ruhezustand.

Vor diesem Hintergrund ist es die Aufgabe der Erfindung, die Bremsvorrichtung der gattungsgemäßen Art derart weiterzuentwickeln, dass die Probleme des verstellbaren Widerlagers und vorzugsweise auch das vorstehend beschriebene Problem des Einflusses der verschleißabhängig veränderlichen Belagkompressibilität auf den Leistungsbedarf der Bremse jedenfalls im wesentlichen behoben werden.

Die Erfindung löst diese Aufgabe durch den Gegenstand des Anspruchs 1 und den des Anspruchs 12.

Danach können die Hebelarme ($l_1$ und $l_2$) in Bezug auf das Widerlager "A" wenigstens zwei oder mehr verschiedene Winkelstellungen zueinander einnehmen. Durch diese Maßnahme wird die Bremsvorrichtung mit einem Kraftübersetzungsmechanismus versehen, welcher bei geeigneter Anordnung der Kraftwirkrichtungen von Speicherfeder und Bremssattel-Spannkraft relativ zu den von diesen Kräfte beaufschlagten Hebelarmen, sowie der Konstellation der Hebelarmlängen und Steifigkeiten der beiden Federsysteme zueinander, in jeder Verstellposition des Hebels und damit bei jeder einzustellenden Spannkraft der Bremse selbsttätig in einem Gleichgewichtszustand befindlich ist.

Die einfache Konstruktion des Hebelsystems in Verbindung mit dessen besonderen Eigenschaften erlaubt dabei eine Anpassung der Übersetzungscharakteristik an die verschleißabhängig veränderliche Sattelsteifigkeit.

Dies wird vorzugsweise dadurch realisiert, dass der die Spannkraft erzeugende Hebelarm in seiner Winkellage relativ zur Kraftrichtung der Spannkraft veränderlich gehalten ist.

Derart wird wiederum vorzugsweise eine gegenüber der Winkelstellung des einen Hebelarmes voreilende Winkellage des anderen Hebels eingestellt. Dieser Vorwinkel wird vorzugsweise durch Einwirkung des in der Bremse vorhandenen Verschleißnachstell-Systems proportional zum Bremsbelagverschleiß vergrößert. Auf diese Weise wird die zunehmende Steifigkeit des Bremssattels durch kontinuierliche Erhöhung des Übersetzungsverhältnisses und angepasste Progression der Übersetzung kompensiert.

Die Erfindung schafft auch eine Scheibenbremse, die einen Bremssattel aufweist, der rahmenartig eine Bremsscheibe z.B. im Randbereich umfasst, wobei als Energiespeicher im Bremssattel eine Speicherfeder angeordnet ist, die sich mit einem ihrer Enden über ein Stützlager an der Innenseite des Bremssattels bzw. eines Federtopfes im von der Bremsscheibe abgewandten Bereich abstützt, wobei das zur Bremsscheibe gewandte Ende bzw. der vordere Bereich der Speicherfeder an einem Gelenk als Anlenkpunkt - vorzugsweise an einem von einem Verstellmechanismusverschwenkbaren Bremshebel angelenkt ist. Diese Bauart ermöglicht eine konstruktiv durchaus kostengünstige und einfache Realisierung der erfindungsgemäßen Bremsvorrichtung als Scheibenbremse.

Die Ansprüche 25 und 30 betreffen vorteilhafte Weiterbildungen, die aber auch als selbstständig erfinderisch zu betrachten sind und die in der Figurenbeschreibung näher erläutert werden. Ein Verfahren zum Durchführen einer Parkbremsung ist in den Ansprüchen 32 und 33 angegeben.

Vorteilhafte Ausgestaltungen sind den Unteransprüchen zu entnehmen.

Nachfolgend sei die Erfindung anhand von Ausführungsbeispielen unter Bezug auf die Zeichnung näher beschreiben. Es zeigen:

Fig. 1, 2     Prinzipskizzen von Bremsvorrichtungen nach dem Stand der Technik;
Fig. 3 - 10     Prinzipskizzen von erfindungsgemäßen Bremsvorrichtungen;
Fig. 11     eine Prinzipskizze einer nicht erfindungsgemäßen Bremsvorrichtung;
Fig. 12     ein Diagramm;
Fig. 13     eine weitere Prinzipskizze einer nicht erfindungsgemäßen Bremsvorrichtung; und
Fig. 14     einen schnittartige Darstellung des Aufbaus einer nicht erfindungsgemäßen Scheibenbremse; und
Fig. 15     einen schnittartige Darstellung des Aufbaus einer nicht erfindungsgemäßen Scheibenbremse;
Fig. 16a- d     schematische Darstellungen zum Funktionsprinzip weiterer alternativer Ausgestaltungen und
Fig. 17     eine schematische Darstellung zur Realisierung einer Parkbremsfunktion mit einer erfindungsgemäßen Scheibenbremse.

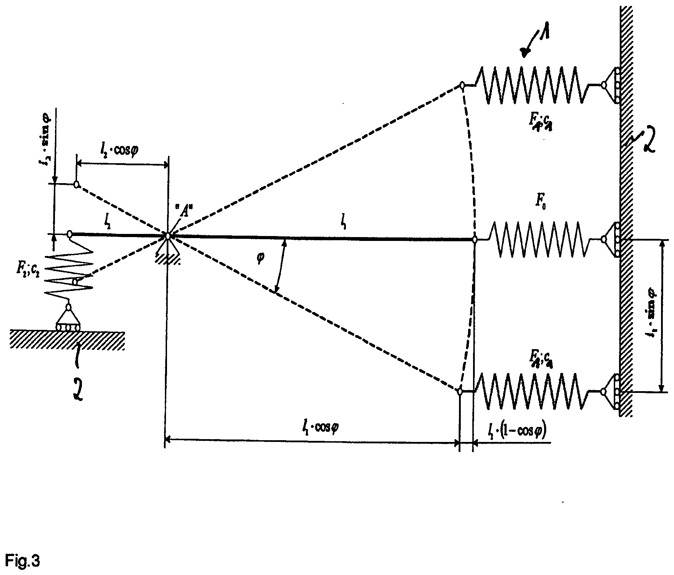

Zunächst sei anhand der Fig. 3 der prinzipielle Aufbau einer erfindungsgemäßen Bremsvorrichtung näher erläutert.

Die Bremsvorrichtung der Fig. 3 weist ein feststehendes Widerlager "A" auf, wobei sich ein Energiespeicher 1 einerseits an einem Bremssattel 2 und andererseits über einen Hebelarm $l_1$ am Widerlager "A" abstützt.

Der Begriff des Bremssattels ist nicht einschränkend zu interpretieren. Er schließt Bremsrahmen, Bremsgehäuse, Federtöpfe und dgl. ein, also federnde Stütz- und Haltemittel, die dazu geeignet sind, das erfindungsgemäße Zuspannkonzept umzusetzen.

Der Bremssattel 2 weist eine eigene Federcharakteristik auf und ist im Prinzipbild als Feder dargestellt.

Bei der Konstruktion der Fig. 3 stellt sich durch Entspannen bzw. Spannen der Federelastizitäten von Energiespeicher (Hebelarm $l_1$) und Bremssattel (Hebelarm $l_2$) entsprechend dem Verhältnis der Hebelarmlängen $l_1$ und $l_2$ sowie der Federsteifigkeiten $c_1$ und $c_2$ ein stabiler Gleichgewichtszustand zwischen Energiespeicher und Bremssattel ein.

Die Hebelarme $l_1$ und $l_2$ können in Bezug auf den fixen Lagerpunkt "A" innerhalb eines vorgegebenen konstruktiven Bereichs beliebige Winkelstellungen zueinander einnehmen.

Wesentlich für die Erfüllung der Gleichgewichtsbedingung ist dabei lediglich die Winkelstellung der Federkräfte $F_1$ und $F_2$ relativ zu den Hebelarmen $l_1$ und $l_2$.

Für das Ausführungsbeispiel der Fig. 3 gilt:

Druckkraft $F_2$: $F_2 = c_2 \cdot l_2 \cdot \sin\varphi$

Druckkraft $F_1$: $F_1 = F_0 - c_1 \cdot l_1 \cdot (1 - \cos\varphi)$

Zugkraft $F_1$: $F_1 = F_0 + c_1 \cdot l_1 \cdot (1 - \cos\varphi)$

$$M_1 = M_2$$

$$F_1 \cdot l_1 \cdot \sin\varphi = F_2 \cdot l_2 \cdot \cos\varphi$$

$$[F_0 - c_1 \cdot l_1 \cdot (1 - \cos\varphi)] \cdot l_1 \cdot \sin\varphi = c_2 \cdot l_2 \cdot \sin\varphi \cdot l_2 \cdot \cos\varphi \,\big|\div \sin\varphi$$

$$F_0 \cdot l_1 - c_1 \cdot l_1^2 + c_1 \cdot l_1^2 \cdot \cos\varphi = c_2 \cdot l_2^2 \cdot \cos\varphi$$

$$c_1 \cdot l_1^2 - c_1 \cdot l_1^2 + c_1 \cdot l_1^2 \cdot \cos\varphi = c_2 \cdot l_2^2 \cdot \cos\varphi \,\big|\, mit : F_0 = c_1 \cdot l_1$$

$$\frac{c_1 \cdot l_1^2}{c_2 \cdot l_2^2} = \frac{\cos\varphi}{\cos\varphi} = 1$$

Mit: $F_0 = c_1 \cdot l_1$ und $\dfrac{l_1^2}{l_2^2} = \dfrac{c_2}{c_1}$ sowie Parallelverschiebung der Kraftwirkungslinien von $F_1$ und $F_2$ ergibt sich ein ständiges Gleichgewicht der wirkenden Drehmomente am feststehenden Drehlagerpunkt "A".

Die Erfindung ist nicht auf das Ausführungsbeispiel der Fig. 3 beschränkt. Nachfolgend werden weitere vorteilhafte Ausführungsformen der Erfindung näher erläutert.

Der im ständigen Gleichgewicht befindliche Mechanismus zum Austausch federelastischer Kräfte wird dadurch realisiert, dass die Hebelarme $l_1$ und $l_2$ im Bezug auf den fixen Lagerpunkt "A" beliebige Winkelstellungen zueinander einnehmen können.

Wesentlich für die Erfüllung der Gleichgewichtsbedingung ist lediglich die Winkelstellung der Federkräfte $F_1$ und $F_2$ relativ zu den Hebelarmen $l_1$ und $l_2$.

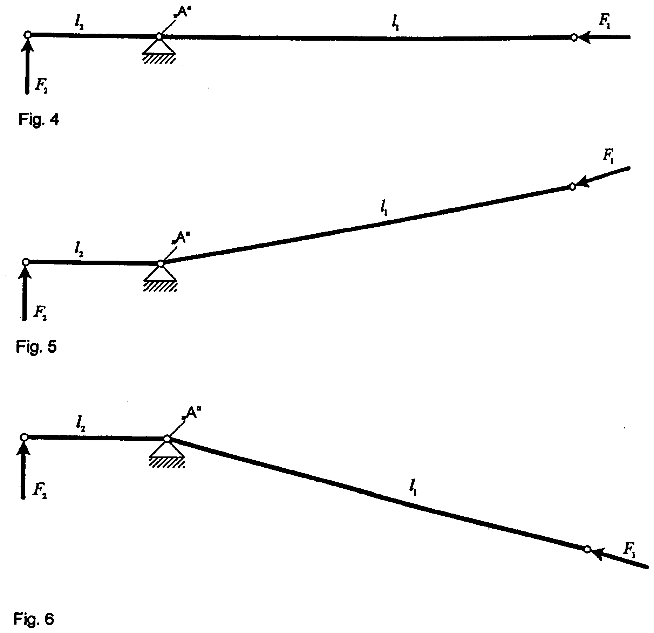

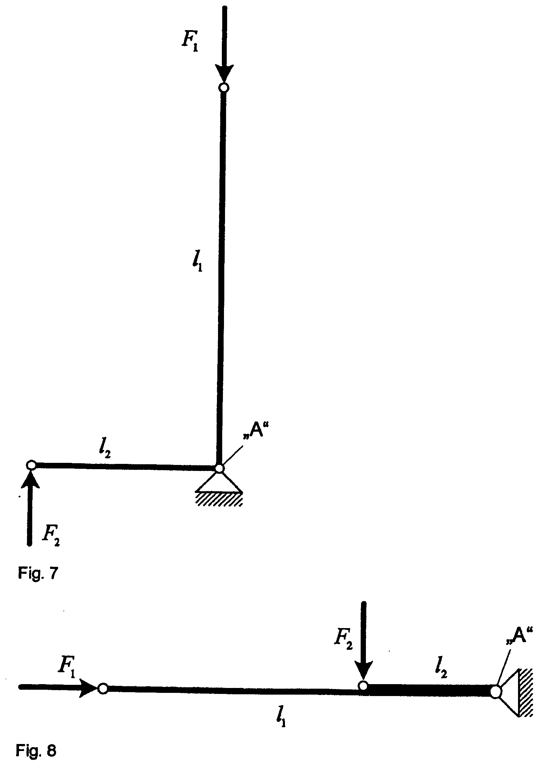

Beispiele möglicher Ausführungsformen sind in den Fig. 4 bis 9 abgebildet.

Sämtlichen dieser Ausführungsbeispiele ist gemeinsam, dass $F_2$ rechtwinklig zum Hebelarm $l_2$ steht und $F_1$ koaxial zum Hebel $l_1$ wirkt.

$l_1$ und $l_2$ sind die Verbindungslinien der Kraftangriffspunkte mit dem fixen Lagerpunkt "A".

$F_1$ und $F_2$ können sowohl Druckfederkräfte als auch Zugfederkräfte sein.

Ebenso können Zugkraft bei $F_1$ und Druckkraft bei $F_2$ und umgekehrt kombiniert werden.

Bei der Ausführung der Vorrichtung nach dem beschriebenen Grundprinzip wird die Wirkrichtung der Kräfte $F_1$ und $F_2$ beibehalten, d.h., dass sich bei einem Verschwenken des Hebels die Krafteinleitungsstelle am Ende des Hebelarms von der Wirkungslinie der Kraft entfernt.

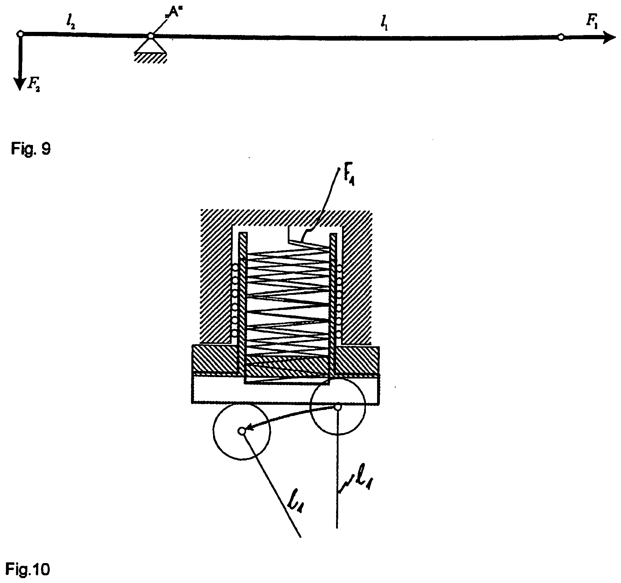

In der Praxis erfordert dies eine Geradführung des Federelementes z.B. durch einen Führungskolben 4 und die Kraftübertragung von der Druckfläche dieses Führungskolbens 4 auf den jeweiligen Hebelarm 5 (siehe Fig. 10).

Alternativ kann eine Parallelverschiebung der Federelemente (siehe Fig. 3) vorgenommen werden.

Die Kolbenführung der Federelemente ist mit einem Bauaufwand verbunden und es entsteht in der Kolbenführung zusätzliche Reibung.

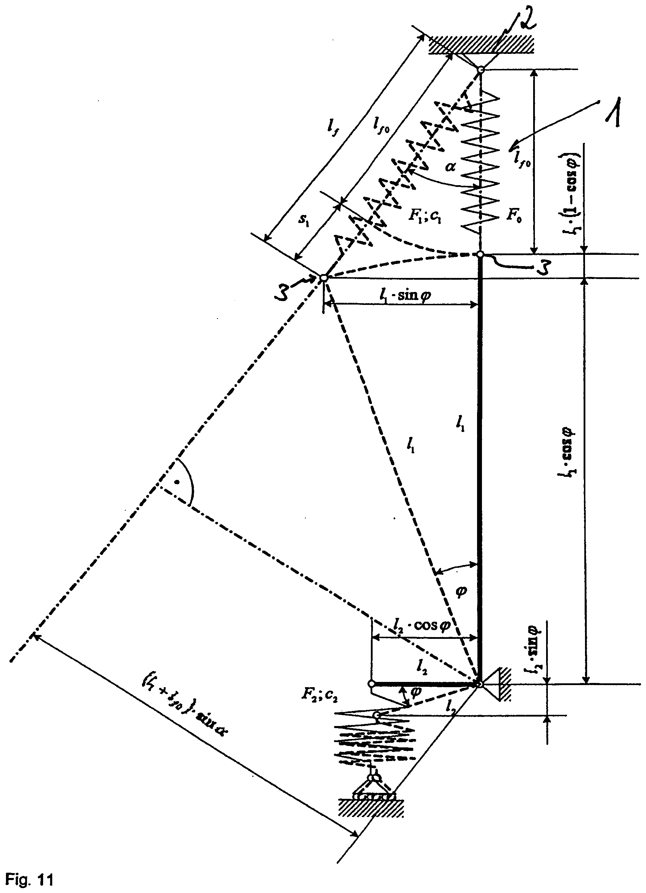

Diese Nachteile können vermieden werden, wenn die Federelemente - insbesondere das den Energiespeicher bildende Federelement - an die Hebelarme I1 gelenkig angebunden werden und somit bei Verschwenken des Hebels I1 auch die Wirkrichtungen der Federkräfte eine Schwenkbewegung ausführen. Ein derartiges Schwenkfederprinzip ist in Fig. 11 abgebildet.

Hier ist der Anlenkpunkt der Feder 1 am Bremssattel 2 fixiert und nicht veränderlich.

Der Anlenkpunkt 3 der Feder 1 am Hebelarm I1 zwischen diesem Punkt und dem Widerlager A ist dagegen veränderlich, beispielsweise dadurch, dass der Hebelarm I1 um das Widerlager A verschwenkbar ist, so dass sich der Anlenkpunkt 3 zwischen Feder 1 und Hebel I auf einem Kreisbogen bewegt.

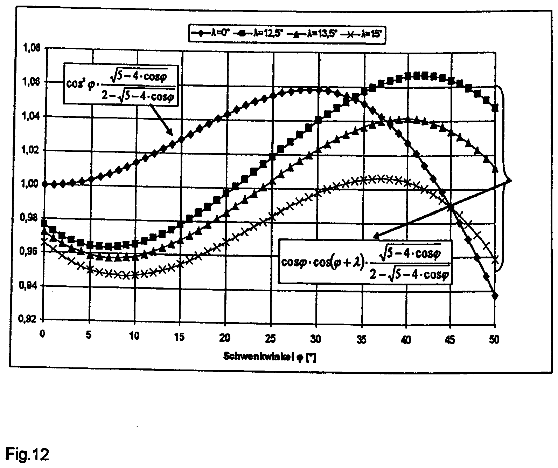

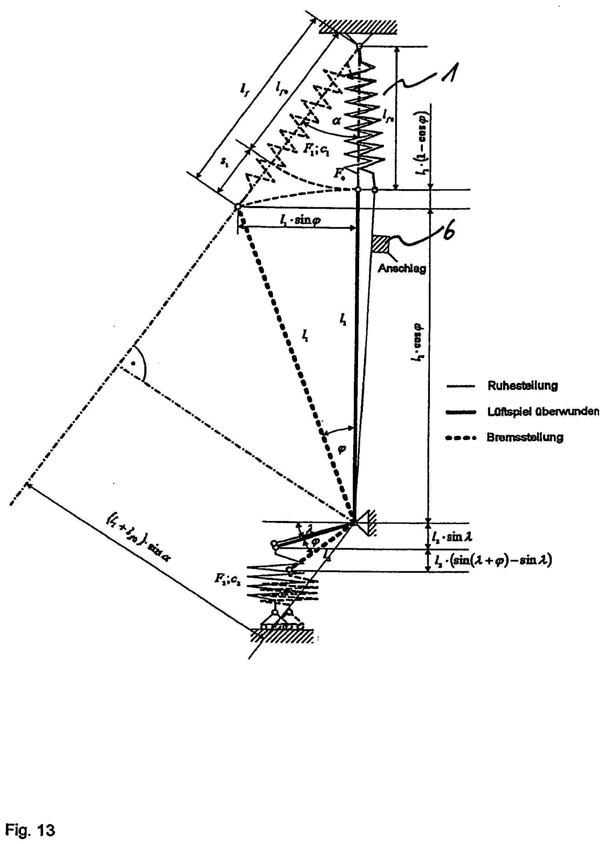

Die rechnerische Herleitung der Gleichgewichtsbedingung gestaltet sich hier schwieriger als beim Grundprinzip, denn es zeigt sich, dass zumindest eine der Größen $l_1$, $l_2$, $c_1$ oder $c_2$ in Abhängigkeit vom Schwenkwinkel variabel sein muss, um die Gleichgewichtsbedingung zu erfüllen. Eine Analyse der Gleichgewichtsbedingung führte jedoch zu der überraschenden Erkenntnis, dass mit der relativ einfach zu realisierenden Maßnahme des Vorwinkels am Hebelarm $l_2$ eine ausreichend genaue Annäherung an die Gleichgewichtsbedingung möglich ist (siehe Fig. 12 und 13).

Durch die mit dem Vorwinkel erzielbare Progression der Gesamtübersetzung wird erreicht, dass der effektiv wirksame Hebelarm $l_2$ angenähert der Beziehung $l_2^2(\varphi) \overset{!}{=} (l_{20} \cdot \cos\varphi)^2 = l_{20}^2 \cdot \cos^2\varphi$ entspricht.

Die Gleichgewichtsbedingung für das Schwenkhebelprinzip lässt sich damit wie folgt herleiten:

$$\frac{2 \cdot l_1^2 \cdot c_1}{c_2} \cdot \frac{2 - \sqrt{5 - 4 \cdot \cos\varphi}}{\sqrt{5 - 4 \cdot \cos\varphi}} = l_2^2(\varphi) \cdot \cos\varphi;$$

$$\frac{2 - \sqrt{5 - 4 \cdot \cos\varphi}}{\sqrt{5 - 4 \cdot \cos\varphi}} \approx \cos^3\varphi$$

für $\varphi$ im Bereich von 0° bis 45° mit

$$l_2^2(\varphi) \overset{!}{=} (l_{20} \cdot \cos\varphi)^2 = l_{20}^2 \cdot \cos^2\varphi$$

eingesetzt :

$$\frac{2 \cdot l_1^2 \cdot c_1}{c_2} \cdot \frac{2 - \sqrt{5 - 4 \cdot \cos\varphi}}{\sqrt{5 - 4 \cdot \cos\varphi}} = l_{20}^2 \cdot \cos^2\varphi \cdot \cos\varphi$$

$$\frac{2 \cdot l_1^2 \cdot c_1}{l_{20}^2 \cdot c_2} \cdot \frac{2 - \sqrt{5 - 4 \cdot \cos\varphi}}{\sqrt{5 - 4 \cdot \cos\varphi}} = \cos^3\varphi$$

$$\frac{2 \cdot l_1^2 \cdot c_1}{l_{20}^2 \cdot c_2} = \frac{\sqrt{5 - 4 \cdot \cos\varphi}}{2 - \sqrt{5 - 4 \cdot \cos\varphi}} \cdot \cos^3\varphi \approx 1$$

Fig. 12 zeigt die sich ergebenden Abweichungen von der Gleichgewichts-Bedingung infolge der Annäherung der Beziehung $l_2^2(\varphi) \stackrel{!}{=} (l_{20} \cdot \cos\varphi)^2 = l_{20}^2 \cdot \cos^2\varphi$ durch die mittels Vorwinkel verschobene Kosinusfunktion.

Der Fehler beträgt max. ca. 5% und kann durch Wahl des geeigneten Vorwinkels insbesondere im Bereich großer Schwenkwinkel und damit hoher Bremskräfte zu Null gemacht werden.

Zur Einstellung einer stabilen Ruheposition des Bremsbetätigungs-Mechanismus ist es vorteilhaft den Hebelarm $l_1$ um einige Winkelgrad vor dem Totpunkt zu positionieren. Dies ist in Fig. 13 dargestellt.

Neben der stabilen Ruhelage an einem definierten Anschlag 6 wird durch diese Anordnung erreicht, dass das Lüftspiel der Bremse im Wesentlichen bereits vor Überschreiten dieser Totlage überwunden werden kann. Damit wird zur Lüftspielüberwindung kein unnötiger Hubverlust der Speicherfeder verursacht.

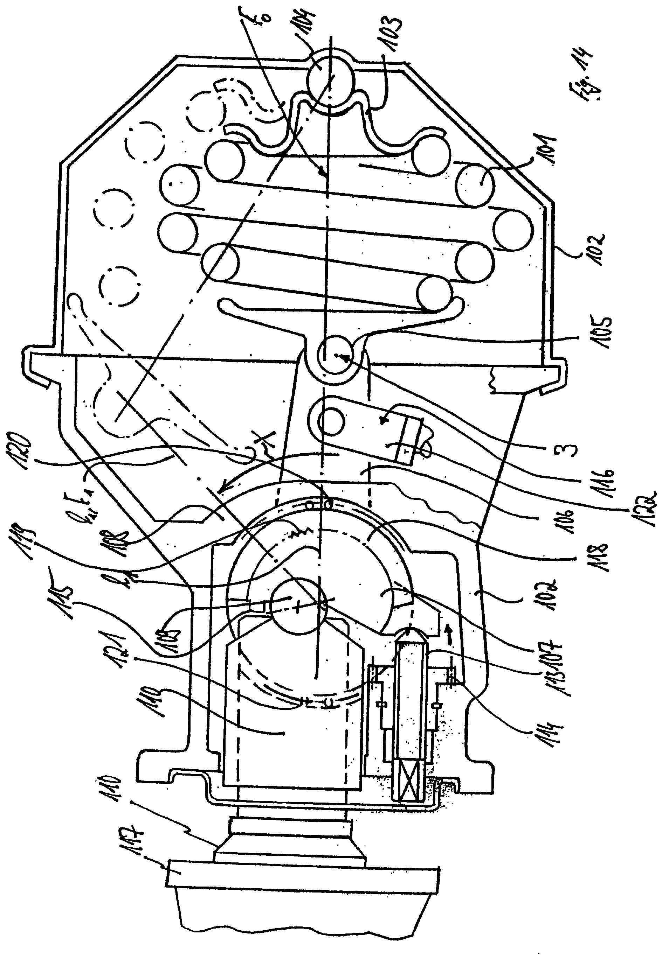

Fig. 14 zeigt den Querschnitt durch eine mögliche konstruktive Ausführung der Bremszuspannung. Aus der Darstellung ist eine der möglichen Ausführungsformen der Vorwinkelverstellung erkennbar.

Die Bremsvorrichtung der Fig. 14 ist als Scheibenbremse ausgebildet.

Sie weist einen Bremssattel (hier ein Bremsgehäuse mit Federtopf) 102 auf, der rahmenartig eine Bremsscheibe (hier nicht dargestellt) z.B. im Randbereich umfasst.

Als Energiespeicher ist im Bremssattel eine Speicherfeder 101 angeordnet. Dies stützt sich mit einem ihrer Enden hier über ein Stützlager - hier ein Teller 103 und ein Rollkörper wie eine Welle oder eine Kugel 104 - an der Innenseite des Bremssattels bzw. hier des Federtopfes im von der Bremsscheibe abgewandten Bereich ab.

Das zur Bremsscheibe gewandte Ende bzw. der vordere Bereich der Speicherfeder 101 ist am Gelenk 105 als Anlenkpunkt 3 an einem verschwenkbaren Bremshebel 106 (auch Drehhebel genannt) als Hebelarm l1 angelenkt, der sich über ein Rollen- oder Gleitlager 120 an einer Innenwandung 108 des Bremssattels 102 abstützt.

Dabei ist das exzenterartige Ende 107 des Bremshebels 106 als Teil eines Verstellexzenters 118 ausgebildet, der sich ergänzend auch zur Bremsscheibe an einem bremssattelgestützten Stützlager 121 (auch als Baueinheit mit dem Stützlager 121) abstützt, wobei der Verstellexzenter 118 über eine Welle 109 als Drehlagerung auf wenigstens ein Druckstück 110 (vorzugsweise eine Nachstellspindel-Druckstückkombination) oder mehrere Druckstücke wirkt, das einen Bremsbelag 117 in Richtung der Bremsscheibe (hier nicht dargestellt; links des Bremsbelages 117) bewegt. Der Bremssattel kann dabei die Bremsscheibe umfassen. Auf der Reaktionsseite könnte im Bremssattel ebenfalls wenigstens eine elektrische Nachstellvorrichtung angeordnet sein (hier ebenfalls nicht dargestellt).

Wird die Speicherfeder 101 dadurch aus ihrer gespannten Stellung gelöst, dass der Bremshebel 106 von einem an diesem winklig bzw. hier sogar im wesentlichen senkrecht angreifenden Linearsteller 116 (mit zugeordnetem Aktuator, insbesondere ein Elektromotor) auf dem Weg des Pfeilbogens x bewegt wird, folgt sie den Drehhebel 106 und spannt über diesen die Bremse zu, so dass dieser wie ein Spreizkeil die Welle 109 und damit das Druckstück 110 in Richtung der Bremsscheibe verschiebt. Je nach Auslegung erfolgt die weitere Zuspannung z.B. bei einem Festsattel durch ein Vorschieben einer verschieblichen Bremsscheibe an den reaktionsseitigen Bremsbelag. Andere Bauformen des Bremssattels sind denkbar.

Das Widerlager A der Bremsvorrichtung der Fig. 14 liegt in der Welle 109. Der Hebelarm l1 wird durch den Drehhebel 106 realisiert.

Die Exzenteranordnung des Bremshebels ist in die äußere Hebellagerung 120, welche mit dem Stützlager 121 zur Abstützung der Speicherfederkraft im nicht betätigten Zustand der Bremse kombiniert ist und den im Inneren - in einer Halbschalenlagerung aufgenommenen - Verstellexzenter 118 geteilt.

Vorteilhaft ist der Verstellexzenter 118 zumindest partiell an seinem äußeren Umfang mit einer Rastverzahnung 119 versehen, welche in komplementärer Form auch am inneren Umfang der Hebellagerschale 112 der Hebellagerung 120 vorhanden ist.

Durch einen relativ flachen Keilwinkel der Rastverzahnung wird erreicht, dass der Verstellexzenter 112 bei Bremsbetätigungen nicht zurückgedreht wird, jedoch im kraftlosen Ruhezustand des Bremshebels verstellt werden kann.

Am Verstellexzenter 112 greift eine Verstellspindel 11,3 an welche über das Antriebsrad 114 mit einem Nachstellgetriebe verbunden ist. Mit zunehmendem Bremsbelagverschleiß wird infolge der von der Nachstellvorrichtung eingeleiteten Drehbewegung die Verstellspindel 113 nach oben bewegt, wobei sie den Verstellexzenter 118 zu größeren Vorwinkeln bewegt.

Durch geeignete Wahl der Antriebs-Übersetzung des Drehantriebes und der Steigung der Verstellspindel 113 wird durch diese Vorwinkeiverstellung eine bestmögliche Kompensation des Einflusses des Bremsbelagverschleißes auf die Gesamtsteifigkeit des Bremssattels 102 erzielt.

Die Rückstellung des Verstellexzenters 118 bei Belagwechsel erfolgt z.B. selbsttätig, indem die zurückfahrende Nachstellspindel mit ihrer dem Bremshebel zugewandten Stirnfläche den Verstellexzenter 118 über dessen Rückstellnocken 115 zurückbewegt.

Der Verstellantrieb - hier der Linearantrieb 116 - für den Bremshebel 106 greift direkt an dem Bremshebel 106 an. Er weist einen Stößel 122 auf, der inear beweglich ist. Er wird über die Bremse aktiviert und gesteuert wird ist in verschiedensten Ausführungsformen realisierbar. So ist anstelle des Linearstellers auch ein direkter Drehantrieb mittels Zahnrad- oder Schneckenrad auf der Lagerwelle des Bremshebels realisierbar (hier nicht dargestellt). Die Konstruktion der Fig. 14 benötigt nur einen sehr kleinen Antrieb mit geringer Antriebsleistung und realisiert - vorzugsweise kombiniert mit einer geeigneten Steuerung - dennoch eine voll funktionsfähige Scheibenbremse auch für schwerere Nutzfahrzeuge.

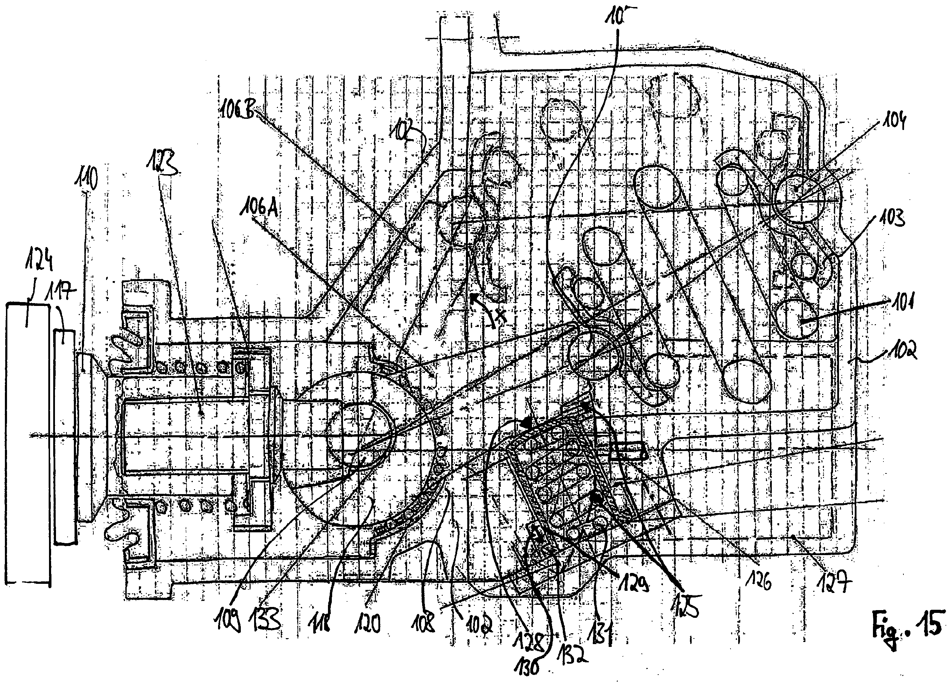

Auch die Bremsvorrichtung der Fig. 15 ist als Scheibenbremse ausgebildet. Sie weist wiederum einen Bremssattel (hier ein Bremsgehäuse mit Federtopf) 102 auf, der rahmenartig eine Bremsscheibe (hier wiederum nicht dargestellt) z.B. im Randbereich umfasst. Der Aufbau entspricht hinsichtlich vieler Komponenten dem der Fig. 14. So weist auch die Scheibenbremse der Fig. 15 als Energiespeicher eine bzw. die Speicherfeder 101 auf, die sich wiederum über ein Stützlager mit dem Teller 103 und dem Rollkörper 104 an der Innenseite des Bremssattels abstützt.

Das zur Bremsscheibe gewandte Ende der Speicherfeder 101 ist wiederum am Gelenk 105 als dem Anlenkpunkt an dem verschwenkbaren Bremshebel 106 als Hebelarm 11 angelenkt, der sich über das Rollen- oder Gleitlager 120 an der Innenwandung 108 des ein- oder hier mehrteiligen Bremssattels 102 abstützt.

Dabei ist auch hier das exzenterartige Ende 107 des Bremshebels 106 als Teil eines Verstellexzenters 118 ausgebildet, wobei der Verstellexzenter 118 vorzugsweise über ein Gleitlager 133 die Welle 109 als Drehlagerung und vorzugsweise eine Spindel-/Mutterkombination 123 (ggf. mit integrierter Nachstelleinrichtung zur Nachstellung von Belag- und Scheibenverschleiß) auf das Druckstück 110 wirkt, das wiederum den Bremsbelag 117 in Richtung der hier schematisch angedeuteten Bremsscheibe 124 bewegt.

Die Speicherfeder 101 ist wiederum aus einer Löseposition (Bremse nicht zugespannt) 106A in eine Zuspannstellung (Bremse zugespannt) 106B überführbar. Zur Bewegung der Speicherfeder zwischen den Positionen A und B wird wiederum ein Aktuator verwendet, der nahezu rechtwinklig am Bremshebel 106 angreift. Hier ist am Drehhebel ein Kronenradsegment 125 angeordnet, dessen Verzahnung mit einem Abtriebsritzel 126 einer Elektromotor-/Getriebeanordnung 127 kämmt. Dreht sich der Elektromotor, bewegt sich das Kronenradsegment 125 zusammen mit dem daran befestigten Drehhebel 106, welcher derart zwischen den Positionen 106A und 106B beweglich ist.

Je nach Auslegung erfolgt die weitere Zuspannung z.B. mit der Speicherfeder über den Drehhebel 106 bei einem Festsattel durch ein Vorschieben einer verschieblichen Bremsscheibe an den reaktionsseitigen Bremsbelag. Andere Bauformen des Bremssattels sind denkbar.

Auch das Widerlager A der Bremsvorrichtung der Fig. 15 liegt in der Welle 109. Der Hebelarm l1 wird durch den Drehhebel 106 realisiert.

Dabei wird der lange Hebelarm 106 des Bremshebels in der Lösestellung der Bremse über seinen oberen Totpunkt hinausschwenkt und mit der nun der Betätigungsrichtung entgegenwirkenden Federkraft gegen einen gehäuseseitigen Anschlag angelegt. (am Bremssattel; Position 106B). Dabei ist der über den oberen Totpunkt hinausführende Schwenkweg des Hebels 106 so bemessen, dass bei Betätigung der Bremse mit dem Zurücklegen dieses Schwenkweges von der Anschlagposition bis zum oberen Totpunkt gerade das Lüftspiel der Bremse überwunden wird. Damit beginnt der Krafthub der Bremse ohne jeglichen Wegverlust bereits im oberen Totpunkt.

Allerdings ist insbesondere bei Ausgestaltungen der Erfindung als Nutzfahrzeugbremsen aufgrund der bei Nutzfahrzeugbremsen üblichen relativ großen Lüftspiele bis zum Erreichen der Anschlagposition schon ein relativ großer über den oberen Totpunkt hinausführender Schwenkwinkel erforderlich. Dies wiederum führt unter Wirkung der in diesem Zustand gegen die Betätigungsrichtung des Drehhebels 106 wirkenden Kraft der Speicherfeder 101 zu hohen Anpresskräften des Drehhebels 106 an den Anschlagpunkt und damit bei Beginn einer Bremsbetätigung zu einer hohen Kraftschwelle, welche vom Antrieb der Bremse (d.h. dem Aktuator mit dem Elektromotor) überwunden werden muss.

Dieses Problem wird nach einer - auch selbstständig als erfinderisch zu betrachtenden - Weiterentwicklung dadurch gelöst, dass der Anlegevorgang der Bremse mit einer niedrigen Kraftschwelle erfolgt, welche so bemessen ist, dass der Brems- bzw. Drehhebel 106 im nicht betätigten Zustand der Bremse gerade sicher gegen mögliche Vibrationseinwirkungen am Anschlag 128 gehalten wird, um Verschleiß an Hebel und Anschlag zu vermeiden.

Realisierbar ist dieser Gedanke insbesondere dadurch, dass als Anschlag 128 ein gefederter Anschlag 128 eingesetzt wird, der zumindest eine Anschlagfeder 131 aufweist.

Der gefederte Anschlag 128 ist vorzugsweise derart bemessen, dass er bei abgehobenem, also betätigtem Bremshebel (Position 106A) durch eine Federkraft in eine erste Position bewegt wird, welche etwa der oberen Totpunkt-Stellung des Bremshebels 106 (d.h., in Fig. 15 fluchten die Federachse und der Hebelarm 106) entspricht bzw. gerade eben "davor" liegt und bei einem Anlegen des Bremshebels in die Position 106B durch die auf den Bremshebel wirkende Kraft der Speicherfeder 101 gegen die auf den Anschlag 128 wirkende Federkraft in eine zweite Position verschoben wird welche die Anschlagposition des Bremshebels ist (Fig. 15).

Nach Fig. 15 weist der gefederte Anschlag als Feder eine Schraubenfeder 131 auf, die in einem Anschlagtopf 129 angeordnet ist, der am Bremssattel zwischen zwei Anschlagpositionen beweglich ist. So kann der Anschlagtopf 129 einen Bund 132 aufweisen, der begrenzt in einem Ringraum 130 im Bremssattel verschieblich ist.

Durch geeignete Bemessung der Kraft der Anschlagfeder 131 - hier der Schraubenfeder 131 - und vor allem durch Wahl eines geeigneten Kraftverlaufes derselben kann die auf den Bremshebel 106 wirkende rückstellende Kraft der Speicherfeder101 im gewünschten Maße reduziert werden. Die Anschlagfeder 128 weist dabei in der ersten Position nur eine geringe Kraft auf, welche dann bei Verschiebung in die zweite Position entsprechend der stark anwachsenden Kraftwirkung der Speicherfeder auf den Bremshebel ebenfalls stark anwächst. Vorzugsweise werden Federbauarten verwendet, welche auch eine dämpfende Wirkung haben wie z.B. paketierte Tellerfedern (hier nicht dargestellt).

Für die Ausführung des gefederten Anschlages sind vielfältige Lösungen denkbar. Fig. 15 ist insofern nicht beschränkend zu verstehen sondern zeigt lediglich eine besonders bevorzugte - einfach bauende - Ausgestaltung.

Vorstehend wurde ein Bremsbetätigungsmechanismus beschrieben, bei welchen die in dem federelastischen Element (z.B. die Stahl-Schraubenfeder bzw. hier Speicherfeder 101) gespeicherte Energie über einen Kraftübersetzungsmechanismus zum Zwecke der Spannkrafterzeugung auf den aufzuspreizenden Bremsmechanismus übertragen wird.

Bei der Realisierung von Bremsbetätigungssystemen, welche die Spannenergie einer Speicherfeder nutzen, um mittels eines Kraftübertragungsmechanismus mit veränderbarer Übersetzung den Bremssattel ohne eine äußere Energiezufuhr zu spreizen und wieder zu entlasten (energy swing - Systeme) ergibt sich ein starker Störeinfluß durch die große Streubreite der Steifigkeit der Bremsbeläge.

Diese Streuung ergibt sich durch Herstelltoleranzen, infolge der durch Verschleiß veränderlichen Dicke, sowie als Folge der Temperaturerhöhung der Beläge bei Bremsvorgängen. Ein minimaler Bedarf an Betätigungsenergie wird bei energy swing - Systemen nur erzielt wenn die Steifigkeiten (also die Federraten) von Bremssattel und Speicherfeder in engen Grenzen konstant bleiben. Dies ist aus den o.g. Gründen nicht der Fall.

Der Einfluss der Bremsbelagverpressung auf die Steifigkeit des Bremssattels kann im Versuch belegt werden.

Durch die im Versuch bestätigbare Streubreite der Sattelsteifigkeiten ergeben sich zwischen min. und max. Sattelsteifigkeit bis 800 Nm unterschiedliche erforderliche Drehmomente am Bremshebel. Auch bei Auslegung der Druckfeder auf den Mittelwert der Sattelsteifigkeit verbleiben ca. 400 Nm Differenzmoment, welches vom Antrieb der Bremse aufgebracht werden müssten.

Die Erfindung schafft insofern eine noch weiter optimierte Bremsenkonstruktion, um dem beschriebenen nachteiligen Effekt entgegen zu wirken.

Die Erfindung nutzt zudem einen Korrektureingriff, um den Einfluss des Bremsbelagverschleißes und ggf. auch der Bremsbelagtemperatur auf die Gesamtsteifigkeit des Bremssattels 102 zu kompensieren.

Üblicherweise werden die Bremssättel von bekannten Scheibenbremsen so gestaltet, dass bei Betätigung der Bremse nur eine minimale Aufspreizung des Sattels erfolgt. Mit dieser Maßnahme wird der Bedarf an Betätigungsenergie gering gehalten.

Bei "Energy-Swing-Bremsen", welche die Betätigungsenergie aus einer integrierten Speicherfeder 101 beziehen, kann die Optimierung des Verformungsverhaltens nach anderen Kriterien erfolgen.

Da die Verformung des Bremssattels an der Gesamtelastizität den gleich bleibenden Anteil darstellt und die Belagverpressung den veränderlichen Anteil, ist es vorteilhaft, eine größere Aufspreizung des Bremssattels zu realisieren als bei konventionellen Bremsen und die Belagverpressung

Da die Eigenschaften der Bremsbeläge bei Erwärmung der Bremse nur in geringem Maße beeinflussbar sind, sind Korrektureingriffe erforderlich. Diese können über den Betätigungsmechanismus der Bremse realisiert werden.

Wesentliche Korrekturmöglichkeiten sind:

a) eine Veränderung der Vorspannung der Speicherfeder
b) eine Veränderung des Winkels zwischen langem und kurzem Hebelarm (Vorwinkelstellung für kurzen Hebelarm)
c) eine Veränderung der Gesamtwinkelstellung des Hebels (Verschiebung der Arbeitsposition, z.B. durch Veränderung des Lüftspieles).
d) eine Verschiebung des Federwiderlagers am Bremsengehäuse

Realisiert werden die Korrekturmöglichkeiten, dass eine oder mehrere - ggf. auch kombiniert - folgender Einrichtungen vorgesehen sind:

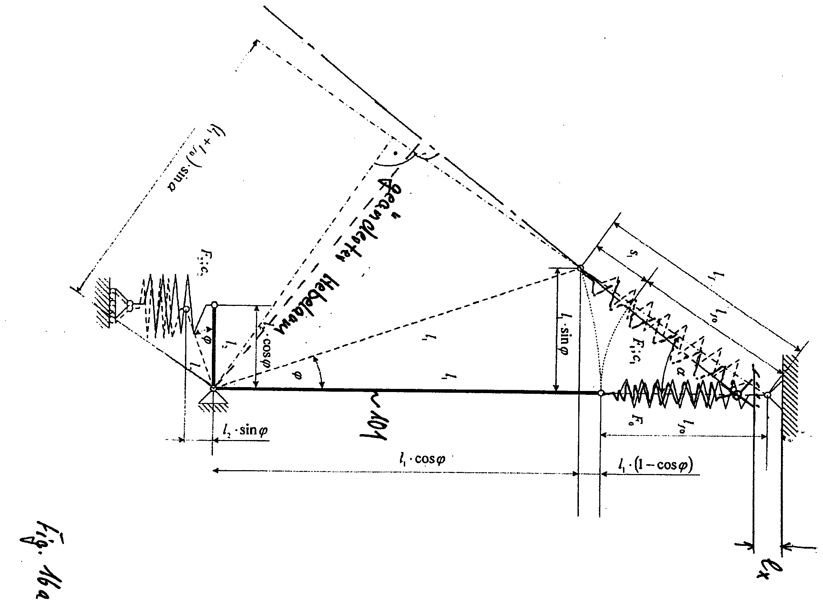

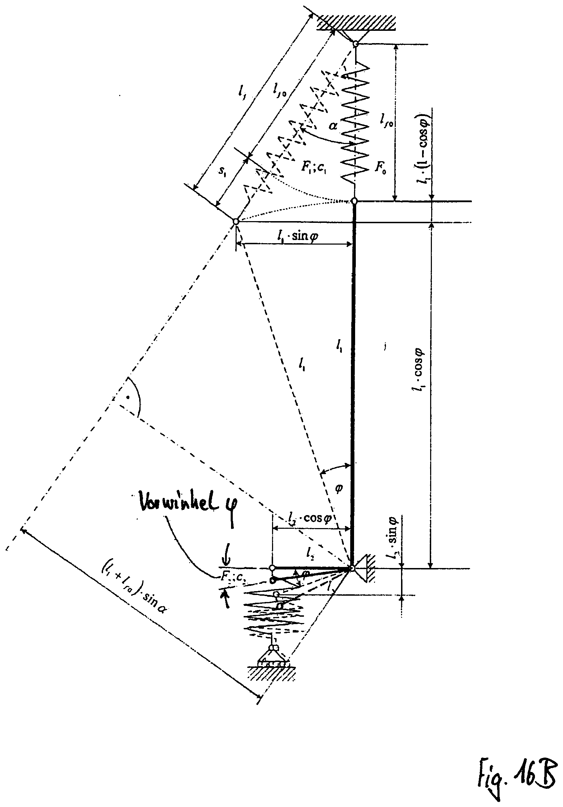

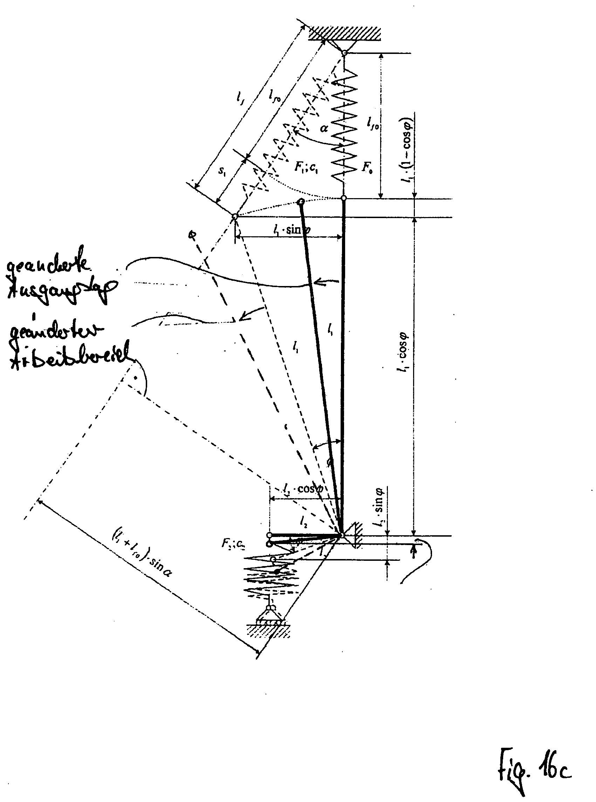

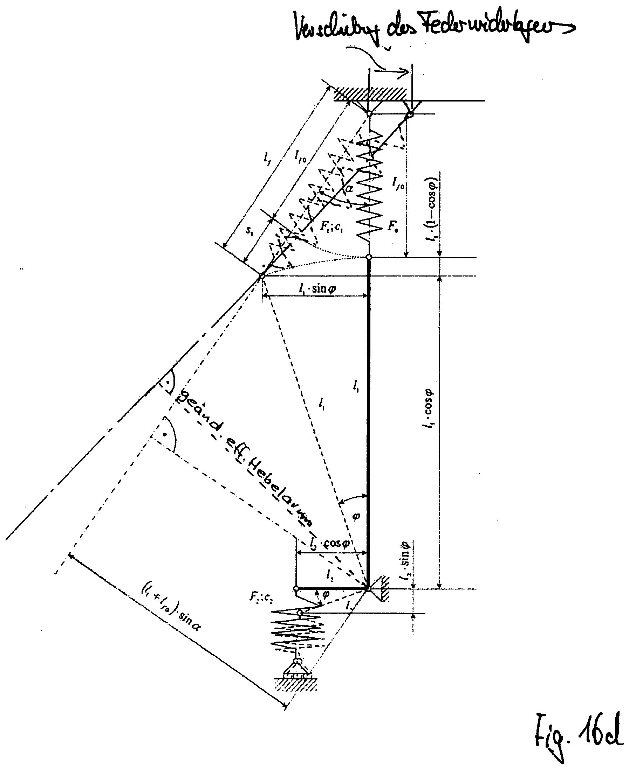

a) eine Einrichtung zur Veränderung der Vorspannung der Speicherfeder (Fig. 16a);
b) eine Einrichtung zur Veränderung des Winkels zwischen langem und kurzem Hebelarm (Vorwinkelstellung für kurzen Hebelarm) (Fig. 16b);
c) eine Einrichtung zur Veränderung der Gesamtwinkelstellung des Hebels (Verschiebung der Arbeitsposition, z.B. durch Veränderung des Lüftspieles) (Fig. 16c); und
d) eine Einrichtung zur Verschiebung des Federwiderlagers am Bremsengehäuse (Fig. 16d).

Nach Fig. 16a wird die Einrichtung zur Veränderung der Vorspannung der Speicherfeder in erfindungsgemäßer Weise durch eine Einrichtung zur Verschiebung eines Anlenkpunktes der Speicherfeder 101 realisiert (z.B. eine hier nicht dargestellte Spindel oder einen verschieblichen Riegel oder dgl.), mit welcher im Prinzip die Länge der Speicherfeder 101 in ihrer Ruheposition z.B. um den Weg Ix veränderbar ist. Die Verstellung dieser Einrichtung kann als Justagemaßnahme z.B. bei der Erstmontage oder im Service vorgesehen werden.

Nach Fig. 16b ist dagegen eine Einrichtung zur Veränderung des Winkels zwischen langem und kurzem Hebelarm vorgesehen, mit der sich der Vorwinkel φ) (Fig. 16b) verstellen lässt.

Die Erzeugung einer veränderlichen Vorwinkelstellung des kurzen Hebelarmes unter Einwirkung des Verschleißnachstellsystems ist dagegen einfacher realisierbar. So kann als Einrichtung zur Veränderung des Winkels zwischen langem und kurzem Hebelarm ein Verstellexzenter vorgesehen sein.

Dabei wird auf einfache Weise durch Verdrehung des Verstell- Exzenters im Spannkraft-losen Zustand des Hebels eine Vorwinkelverstellung durch eine mit dem Verschleißnachstellsystem gekoppelte Verstellschraube bewirkt. Diese Lösung ist zur Anpassung an die verschleißabhängige Zunahme der Gesamtsteifigkeit des Bremssattels besonders geeignet.

Fig. 16c) zweigt analog eine Einrichtung zur Veränderung der Gesamtwinkelstellung des Hebels (Verschiebung der Arbeitsposition, z.B. durch Veränderung des Lüftspieles).

Die Veränderung der Gesamtwinkelstellung wird vorteilhaft im spannkraftfreien Zustand der Bremse, also in der Ruhestellung des Bremshebels vorgenommen. Hierbei wird die Anschlagstellung des Bremshebels verändert und/oder das Lüftspiel der Bremse. Diese Maßnahme mit verstellbarem Hebelanschlag und/oder variablem Lüftspiel ist besonders geeignet die temperaturabhängige Verminderung der Gesamtsteifigkeit des Bremssattels zu kompensieren.

Fig. 16d veranschaulicht schließlich eine erfindungsgemäße Einrichtung zur Verschiebung des Federwiderlagers am Bremsengehäuse (Fig. 16d).

Die Verschiebung des Federwiderlagers ist eine besonders geeignete Maßnahme um das Selbstlöseverhalten der Bremse an die unterschiedlichen Anforderungen des Berteibsbremsfalles BBA und des Feststellbremsfalles FBA anzupassen.

Bei einer Verschiebung des Widerlagers in Schwenkrichtung des Bremshebels wird die Wirkrichtung der Federkraft so verändert, dass, bei genügender Verschiebung, die Bremse aufgrund des kleineren wirksamen Hebelarmes selbsttätig öffnet. Dies ist der für den Betriebsbremsfall geforderte Zustand. Bei Verschiebung des Widerlagers entgegen der Schwenkrichtung des Bremshebels ergibt sich infolge der veränderten Wirkrichtung der Federkraft ein größerer effektiver Hebelarm, so dass, bei genügender Verschiebung, die Spannkraft am Bremssattel durch Einwirkung der Speicherfeder erhalten bleibt. Die ist der für den Parkbremsfall gewünschte Zustand.

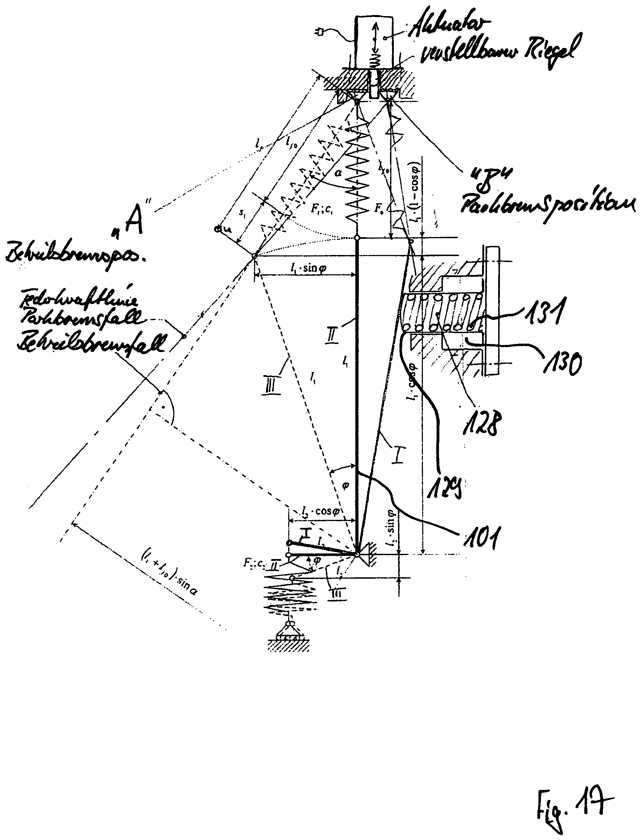

Anhand der Fig. 17"Wirkungsweise Parkbremse" wird nachfolgend dieser Vorgang beschrieben:

In der Skizze sind drei Hebelpositionen dargestellt:

I - Nicht betätigter Zustand. Ruheposition des Bremshebels am gefederten Anschlag.
II - Beginn einer Betriebsbremsbetätigung. Position des Hebels nach der Lüftspielüberwindung und vor Beginn des Kraftaufbaus.
III - Betriebs- oder Parkbremsstellung des Bremshebels.

Des Weiteren zeigt die Skizze zwei Positionen des Federwiderlagers:

"A" - Betriebsbremsposition
"B" - Parkbremsposition

Mit den möglichen Kombinationen von Hebel - und Widerlagerposition können die gewünschten Betriebszustände der Bremse eingestellt werden.

Die gewünschten Betriebszustände sind

Betriebsbremsfall:

Bei passivem Bremsaktuator (z.B. Ausfall des el. Antriebes während einer Bremsung) soll die Bremse selbsttätig Lösen um instabile Fahrzustände zu vermeiden und das Fahrzeug betriebsfähig zu erhalten.

Parkbremsfall:

Bei eingelegter Parkbremse soll die Bremswirkung ohne Betätigungsenergie aufrechterhalten werden. Schrumpfungsvorgänge an der Bremse sollten durch selbsttätiges Nachstellen kompensiert werden.

Diese konträren Anforderungen können durch Verstellen des Feder - Widerlagers erfüllt werden.
Ablauf einer Parkbremsbetätigung:

- Einlegen der Parkbremse:

- Betätigung der Bremse und Verschwenken des Bremshebels in Bremsstellung.
- Zurückziehen des verstellbaren Riegels gegen die Kraft der Rückstellfeder durch den Aktuator. (Z.B. Magnetsteller oder el. mech. Linearsteller)
- Verschieben des Federwiderlagers durch die Reaktionskraft der Speicherfeder in die Parkbremsposition "B".
- Durch die veränderte Wirkrichtung der Speicherfeder ist nun ein sicherer Überschuss des Betätigungsmomentes der Speicherfeder gegen das Rückstellmoment des Bremssattels gegeben.

Lösen der Parkbremse:

- Rückstellen des Bremshebels durch den Bremsaktuator in die Ruheposition I.
- Zurückschieben des Federwiderlagers in die Betriebsbremsposition durch die Reaktionskraft der Speicherfeder (ggf. mit Unterstützung durch eine zusätzliche Rückstellkraft, z.B. einer Rückstellfeder.).
- Einschieben des Riegels durch den Aktuator.

Anstelle der Verschiebbarkeit des Federwiderlagers ist auch ein Schwenkmechanismus anwendbar.

Die beschriebenen Maßnahmen a) bis d) können durchaus in Kombination angewendet werden. Das notwendige Betätigungsdrehmoment der Bremse kann damit auf Beträge unter 50 Nm begrenzt werden.

| Bezugszeichen | |
|---|---|
| Widerlager | A |
| Hebelarm | $l_1$ |
| Hebelarm | $l_2$ |
| Federsteifigkeiten | $c_1$ und $c_2$ |
| Pfeilbogen | x |
| Energiespeicher | 1 |
| Bremssattel | 2 |
| Anlenkpunkt | 3 |
| Führungskolben | 4 |
| Hebelarm | 5 |
| Anschlag | 6 |
| Speicherfeder | 101 |
| Bremssattel | 102 |
| Teller | 103 |
| Kugel | 104 |
| Gelenk | 105 |
| Bremshebel | 106 |
| Hebelexzenterabschnitt | 107 |
| Innenwandung | 108 |
| Welle | 109 |
| Druckstück | 110 |
| Bremsscheibe | 111 |
| Hebellagerschale | 112 |
| Verstellspindel | 113 |
| Antriebsrad | 114 |
| Rückstellnocken | 115 |
| Linearsteller | 116 |
| Bremsbelag | 117 |
| Verstellexzenter | 118 |
| Rastverzahnung | 119 |
| Rollen- oder Gleitlager | 120 |
| Stützlager | 121 |
| Stößel | 122 |
| Spindel-/Mutterkombination | 123 |
| Bremsscheibe | 124 |

(fortgesetzt)

| | |
|---|---|
| Kronenradsegment | 125 |
| Abtriebsritzel | 126 |
| Motor-/Getriebeanordnung | 127 |
| Positionen | 106A und 106B |
| gefederter Anschlag | 128 |
| Anschlagtopf | 129 |
| Ringraum | 130 |
| Anschlagfeder | 131 |
| Bund | 132 |
| Gleitlager | 133 |
| Einrichtung | 134, 135, 136, 137 |

**Patentansprüche**

1. Bremsvorrichtung, insbesondere Scheibenbremse, mit

   a. einem Bremssattel (102) und mit einem Energiespeicher, in Form einer Speicherfeder (101), und
   b. wobei sich der Energiespeicher (1) einerseits am Bremssattel (2) und andererseits mit einem ersten Hebelarm ($l_1$) an einem Widerlager (A) abstützt, und
   c. wobei ein Mechanismus zum Austausch federelastischer Kräfte zwischen dem Energiespeicher (F1,c1) als dem einen Federelement (F1,C2,) und dem Bremssattel als weiterer Federelement (F2,c2) mit einem zweiten Hebelarm ($l_2$) über das Widerlager (A) realisiert ist,
   d. die Hebelarme ($l_1$ und $l_2$) im Bezug auf das Widerlager "A" wenigstens zwei oder mehr verschiedene Winkelstellungen zueinander einnehmen können.

   **dadurch gekennzeichnet, dass**

   e. der Anlenkpunkt der Speicherfeder am Bremssattel veränderlich ist.

2. Bremsvorrichtung nach Anspruch 1, **dadurch gekennzeichnet, dass** die Hebelarme ($l_1$ und $l_2$) derart ausgelegt sind, dass sie in einem vorgegebenen maximalen Bereich im Bezug auf das Widerlager "A" beliebige Winkelstellungen zueinander einnehmen können.

3. Bremsvorrichtung nach einem der vorstehenden Ansprüche, **dadurch gekennzeichnet, dass** der die Spannkraft erzeugende erste Hebelarm ($l_1$) in seiner Winkellage relativ zur Kraftrichtung der Spannkraft ($F_2$) veränderlich ist.

4. Bremsvorrichtung nach einem der vorstehenden Ansprüche, **dadurch gekennzeichnet, dass** eine gegenüber der Winkelstellung des zweiten Hebelarmes ($l_2$) voreilende Winkellage - Vorwinkel - des anderen Hebelarms eingestellt ist.

5. Bremsvorrichtung nach Anspruch 4, **dadurch gekennzeichnet, dass** der Vorwinkel vorzugsweise durch Einwirkung des in der Bremse vorhandenen Verschleißnachstell-Systems proportional zum Bremsbelagverschleiß vergrößerbar ist.

6. Bremsvorrichtung nach einem der vorstehenden Ansprüche, **dadurch gekennzeichnet, dass** die Federkräfte der Speicherfeder und des Bremssattels $F_1$ und $F_2$ Druckfederkräfte und/oder Zugfederkräfte sind.

7. Bremsvorrichtung nach einem der vorstehenden Ansprüche, **dadurch gekennzeichnet, dass** eine Geradführung des Federelementes vorgesehen ist, welches durch den Energiespeicher gebildet wird.

8. Bremsvorrichtung nach einem der vorstehenden Ansprüche, **gekennzeichnet durch** einen Führungskolben (4) und eine Kraftübertragung von der Druckfläche dieses Führungskolbens (4) auf den jeweiligen Hebelarm (5).

9. Bremsvorrichtung nach einem der vorstehenden Ansprüche, **dadurch gekennzeichnet, dass** die Federelemente

an die Hebelarme ($l_1$, $l_2$) gelenkig angebunden sind, so dass bei einem Verschwenken des Hebels auch die Wirkrichtungen der Federkräfte eine Schwenkbewegung ausführen.

10. Bremsvorrichtung nach einem der vorstehenden Ansprüche, **dadurch gekennzeichnet, dass** zur Einstellung einer stabilen Ruheposition des Bremsbetätigungs-Mechanismus der erste Hebelarm ($l_1$) um einige Winkelgrad vor einem Totpunkt positioniert ist, wobei in dem Totpunkt bzw. der Totlage eine Federachse des Energiespeichers (F1,c1) und der erste Hebelarm ($l_1$) fluchten.

11. Bremsvorrichtung nach Anspruch 10, **dadurch gekennzeichnet, dass** das Lüftspiel der Bremse im Wesentlichen bereits vor Überschreiten der Totlage überwindbar ist.

12. Bremsvorrichtung nach einem der vorstehenden Ansprüche, **gekennzeichnet durch** eine Ausbildung als Scheibenbremse, die den Bremssattel (102) aufweist, der rahmenartig eine Bremsscheibe z.B. im Randbereich umfasst, wobei als Energiespeicher im Bremsattel eine Speicherfeder (101) angeordnet ist, die sich mit einem ihrer Enden über ein Stützlager an der Innenseite des Bremssattels bzw. eines Federtopfes im von der Bremsscheibe abgewandten Bereich abstützt, wobei das zur Bremsscheibe gewandte Ende bzw. der vordere Bereich der Speicherfeder (101) an einem Gelenk (105) als Anlenkpunkt (3) an einem verschwenkbaren Bremshebel (106) als erster Hebelarm ($l_1$) angelenkt ist.

13. Bremsvorrichtung nach Anspruch 12, **dadurch gekennzeichnet, dass** sich der Bremshebel (106) über ein Rollen- oder Gleitlager (119) an einer Innenwandung (108) des Bremssattels (102) abstützt.

14. Bremsvorrichtung nach Anspruch 12 oder 13, **dadurch gekennzeichnet, dass** ein exzenterartiges Ende (107) des Drehhebels (106) Teil eines Verstellexzenters (118) ist, der sich an einem bremssattelgestützten Stützlager (121) abstützt, wobei der Verstellexzenter 118 über eine Welle (109) als Drehlagerung auf wenigstens ein Druckstück (110) wirkt, das einen Bremsbelag (117) in Richtung der Bremsscheibe drückt.

15. Bremsvorrichtung nach einem der Ansprüche 12 bis 14, **dadurch gekennzeichnet, dass** am Bremshebel (106) ein Verstellantrieb angreift.

16. Bremsvorrichtung nach Anspruch 15, **dadurch gekennzeichnet, dass** der Verstellantrieb einen elektromotorischen Antrieb aufweist.

17. Bremsvorrichtung nach Anspruch 15 oder 16, **dadurch gekennzeichnet, dass** der Verstellantrieb als Linearsteller ausgebildet ist.

18. Bremsvorrichtung nach einem der Ansprüche 14 bis 17, **dadurch gekennzeichnet, dass** das Widerlager A der Bremsvorrichtung in der Welle (109) liegt.

19. Bremsvorrichtung nach einem der Ansprüche 14 bis 18, **dadurch gekennzeichnet, dass** die Exzenteranordnung des Bremshebels in eine äußere Hebellagerung (120), welche mit dem Stützlager (121) zur Abstützung der Speicherfederkraft im nicht betätigten Zustand der Bremse kombiniert ist und den im Inneren - in einer Halbschalenlagerung aufgenommenen-Verstellexzenter (118) geteilt ist.

20. Bremsvorrichtung nach Anspruch 19, **dadurch gekennzeichnet, dass** der Verstellexzenter (118) zumindest partiell an seinem äußeren Umfang mit einer Rastverzahnung (119) versehen ist, welche in komplementärer Form auch am inneren Umfang der Hebellagerschale (112) der Hebellagerung (120) vorhanden ist.

21. Bremsvorrichtung nach Anspruch 20, **dadurch gekennzeichnet, dass** die Rastverzahnung derart ausgestaltet ist, dass der Verstellexzenter (118) bei Bremsbetätigungen nicht zurückgedreht wird, jedoch im kraftlosen Ruhezustand des Bremshebels verstellt werden kann.

22. Bremsvorrichtung nach Anspruch 20 oder 21, **dadurch gekennzeichnet, dass** am Verstellexzenter (118) eine Verstellspindel (113) angreift.

23. Bremsvorrichtung nach Anspruch 22, **dadurch gekennzeichnet, dass** die Verstellspindel (113) über ein Antriebsrad (114) mit einem Nachstellgetriebe verbunden ist, derart, dass die Verstellspindel (113) den Verstellexzenter (118) mit zunehmendem Belagverschleiß zu größeren Vorwinkeln bewegt.

**24.** Bremsvorrichtung nach einem der Ansprüche 14 bis 23, **dadurch gekennzeichnet, dass** am Verstellexzenter (118) ein Rückstellnocken (115) angeordnet ist.

**25.** Bremsvorrichtung nach einem der vorstehenden Ansprüche, welche einen zwischen zwei Endstellungen verschwenkbaren Dreh- bzw. Bremshebel (106) aufweist, **dadurch gekennzeichnet, dass** der Drehhebel in wenigstens einer seiner Endstellungen an einem federnden Anschlag (128) anliegt.

**26.** Bremsvorrichtung nach Anspruch 25, **dadurch gekennzeichnet, dass** der federnde Anschlag eine Anschlagfeder (131) aufweist.

**27.** Bremsvorrichtung nach Anspruch 26, **dadurch gekennzeichnet, dass** die Anschlagfeder (131) als Tellerfeder oder Schraubenfeder ausgelegt ist.

**28.** Bremsvorrichtung nach Anspruch 26 oder 27, **dadurch gekennzeichnet, dass** die Anschlagfeder (131) in einem Anschlagtopf angeordnet ist, der relativ zum Bremssattel zwischen zwei Stellungen beweglich ist.

**29.** Bremsvorrichtung nach einem der Ansprüche 26 bis 28, **dadurch gekennzeichnet, dass** der Anschlagtopf (129) einen Bund (132) aufweist, der begrenzt in einem Ringraum (130) im Bremssattel verschieblich ist.

**30.** Bremsvorrichtung nach einem der vorstehenden Ansprüche, **dadurch gekennzeichnet, dass** eine oder mehrere folgender Einrichtungen vorgesehen sind:

a. eine Einrichtung zur Veränderung der Vorspannung der Speicherfeder (Fig. 16a);
b. eine Einrichtung zur Veränderung des Winkels zwischen langem und kurzem Hebelarm (Vorwinkelstellung für kurzen Hebelarm) (Fig. 16b);
c. eine Einrichtung zur Veränderung der Gesamtwinkelstellung des Hebels (Verschiebung der Arbeitsposition, z.B. durch Veränderung des Lüftspieles) (Fig. 16c); und / oder
d. eine Einrichtung zur Verschiebung des Federwiderlagers am Bremsengehäuse bzw. Bremssattel.

**31.** Bremsvorrichtung nach Anspruch 30, **dadurch gekennzeichnet, dass** wenigstens eine der Einrichtungen a) bis d) als Verstellspindel oder als Verstellexzenter ausgebildet ist.

**32.** Verfahren zur Durchführung einer Parkbremsung mit einer Scheibenbremse nach Anspruch 30 oder 31, **dadurch gekennzeichnet, dass** zum Einlegen der Parkbremse folgende Schritte durchlaufen werden:

a. Betätigung der Bremse und Verschwenken des Bremshebels in Bremsstellung;
b. Zurückziehen eines verstellbaren Riegels gegen die Kraft einer Rückstellfeder durch einen Aktuator; und
c. Verschieben des Federwiderlagers durch die Reaktionskraft der Speicherfeder in die Parkbremsposition.

**33.** Verfahren nach Anspruch 32, **dadurch gekennzeichnet, dass** zum Lösen der Parkbremse ferner folgende Schritte durchgeführt werden:

a. Rückstellen des Bremshebels durch den Bremsaktuator in eine Ruheposition I,
b. Zurückschieben des Federwiderlagers in eine Betriebsbremsposition durch die Reaktionskraft der Speicherfeder (ggf. mit Unterstützung durch eine zusätzliche Rückstellkraft, z.B. einer Rückstellfeder.), und
c. Einschieben des Riegels durch den Aktuator.

**Claims**

**1.** Brake device, in particular a disc brake, having

a. a brake calliper (102) and having an energy accumulator, in the form of an accumulator spring (101), and
b. wherein the energy accumulator (1) rests on one side on the brake calliper (2) and on the other side with a first lever arm ($l_1$) against an abutment (A), and
c. wherein a mechanism for exchanging spring elastic forces is realised between the energy accumulator (F1, c1) as one spring element (F1, C2) and the brake calliper as a further spring element (F2, c2), with a second lever arm ($l_2$), via the abutment (A),

d. the lever arms ($l_1$ and $l_2$) can assume, with respect to the abutment "A", at least two or more different angular positions relative to each other,

**characterised in that**

e. the articulation point of the accumulator spring can be changed on the brake calliper.

2. Brake device according to claim 1, **characterised in that** the lever arms ($l_1$ and $l_2$) are designed so that they can assume, in a predefined maximum range, with respect to the abutment "A", any angular positions relative to each other.

3. Brake device according to one of the preceding claims, **characterised in that** the first lever arm ($l_1$) producing the tensioning force can be changed in its angular position relative to the force direction of the tensioning force ($F_2$).

4. Brake device according to one of the preceding claims, **characterised in that** an angular position - pre-angle or leading angle - that is leading with respect to the angular position of the second lever arm ($l_2$), of the other lever arm is set.

5. Brake device according to claim 4, **characterised in that** the pre-angle can preferably be increased through the effect of the wear adjustment system present in the brake proportionally to the brake pad wear.

6. Brake device according to one of the preceding claims, **characterised in that** the spring forces of the accumulator spring and the brake calliper $F_1$ and $F_2$ are compression spring forces and / or tension spring forces.

7. Brake device according to one of the preceding claims, **characterised in that** a straight-line guiding of the spring element is provided, which is formed by the energy accumulator.

8. Brake device according to one of the preceding claims, **characterised by** a guide piston (4) and a force transmission from the pressure surface of this guide piston (4) to the respective lever arm (5).

9. Brake device according to one of the preceding claims, **characterised in that** the spring elements are attached in the manner of a hinge to the lever arms ($l_1$, $l_2$), so that, upon pivoting of the lever, the directions of effect of the spring forces also carry out a pivot movement.

10. Brake device according to one of the preceding claims, **characterised in that**, to set a stable rest position of the brake activation mechanism, the first lever arm ($l_1$) is positioned by a few degrees in front of a dead centre, wherein a spring axis of the energy accumulator ($F1$, $c1$) and the first lever arm ($l_1$) align in the dead centre or dead point.

11. Brake device according to claim 10, **characterised in that** the air play of the brake can be overcome substantially already before exceeding the dead centre.

12. Brake device according to one of the preceding claims, **characterised in that** through a design as a disc brake, which has the brake calliper (102), which comprises, in the manner of a frame, a brake disc e.g. in the edge region, wherein an accumulator spring (101) is arranged as an energy accumulator in the brake calliper, which rests with one of its ends via a support bearing on the inner side of the brake calliper or a spring cup in the region facing away from the brake disc, wherein the end facing towards the brake disc, or the front region of the accumulator spring (101), is attached in the manner of a hinge at a joint (105) as an articulation point (3) on a pivotable brake lever (106) as a first lever arm ($l_1$).

13. Brake device according to claim 12, **characterised in that** the brake lever (106) rests via a roller bearing or sliding bearing (119) on an inner wall (108) of the brake calliper (102).

14. Brake device according to claim 12 or 13, **characterised in that** an eccentric-type end (107) of the rotary lever (106) is part of an eccentric adjustment element (118), which rests on a brake-calliper-supported support bearing (121), wherein the eccentric adjustment element (118) acts via a shaft (109) as a rotary bearing on at least one pressure element (110), which presses a brake pad (117) in the direction of the brake disc.

15. Brake device according to one of claims 12 to 14, **characterised in that** an adjustment drive engages on the brake lever (106).

16. Brake device according to claim 15, **characterised in that** the adjustment drive has an electro-motorised drive.

17. Brake device according to claim 15 or 16, **characterised in that** the adjustment drive is designed as a linear adjuster.

18. Brake device according to one of claims 14 to 17, **characterised in that** the abutment A of the brake device lies in the shaft (109).

19. Brake device according to one of claims 14 to 18, **characterised in that** the eccentric arrangement of the brake lever is divided into an outer lever bearing (120), which is combined with the support bearing (121) to support the accumulator spring force in the non-activated state of the brake, and the eccentric adjustment element (118) on the inner side received in a half shell bearing.

20. Brake device according to claim 19, **characterised in that** the eccentric adjustment element (118) is provided at least partially on its outer circumference with detent toothing (119), which is present in a complementary form also on the inner circumference of the lever bearing shell (112) of the lever bearing (120).

21. Brake device according to claim 20, **characterised in that** the detent toothing is designed so that the eccentric adjustment element (118) is not rotated back, upon brake activation, but can be adjusted in the forceless state of rest of the brake lever.

22. Brake device according to claim 20 or 21, **characterised in that** an adjusting spindle (113) engages on the eccentric adjustment element (118).

23. Brake device according to claim 22, **characterised in that** the adjusting spindle (113) is connected via a drive wheel (114) to an adjustment gear in such a way that the adjusting spindle (113) moves the eccentric adjustment element (118) with increasing pad wear at greater pre-angles.

24. Brake device according to one of claims 14 to 23, **characterised in that** a retaining cam (115) is arranged on the eccentric adjustment element (118).

25. Brake device according to one of the preceding claims, which has a rotary or brake lever (106) which can be pivoted between two end positions, **characterised in that** the rotary lever lies, in at least one of its end positions, against a resilient stop (128).

26. Brake device according to claim 25, **characterised in that** the resilient stop has a stop spring (131).

27. Brake device according to claim 26, **characterised in that** the stop spring (131) is designed as a plate spring or helical spring.

28. Brake device according to claim 26 or 27, **characterised in that** the stop spring (131) is arranged in a stop cup, which can be moved relative to the brake calliper between two positions.

29. Brake device according to one of claims 26 to 28, **characterised in that** the stop cup (129) has a collar (132), which is limitedly displaceable in an annular space (130) in the brake calliper.

30. Brake device according to one of the preceding claims, **characterised in that** one or more of the following are provided:

   a. a means for changing the pre-tension of the accumulator spring (Fig. 16a);
   b. a means for changing the angle between long and short lever arm (pre-angle position for short lever ram) (Fig. 16b);
   c. a means for changing the total angular position of the lever (displacement of the work position, e.g. by changing the air play) (Fig. 16c); and / or
   d. a means for displacing the spring abutment on the brake housing or brake calliper.

31. Brake device according to claim 30, **characterised in that** at least one of the means a) to d) is formed as an adjustment spindle or as an eccentric adjustment element.

**32.** Method for carrying out a parking brake operation with a disc brake according to claim 30 or 31, **characterised in that**, to engage the parking brake, the following steps are taken:

a. activate the brake and pivot the brake lever in the brake position;
b. pull back an adjustable latch against the force of a return spring through an actuator; and
c. displace the spring abutment through the reaction force of the accumulator spring into the parking brake position.

**33.** Method according to claim 32, **characterised in that** the further following steps are carried out to release the parking brake:

a. restore the brake lever through the brake actuator into a position of rest I,
b. push back the spring abutment into an operating brake position through the reaction force of the accumulator spring (optionally with support through an additional restoring force, e.g. of a return spring), and
c. insert the latch through the actuator.

**Revendications**

**1.** Dispositif de freinage, notamment frein à disque, comprenant

a. un étrier (102) de frein et un accumulateur d'énergie sous la forme d'un ressort (101) accumulateur et
b. dans lequel l'accumulateur (1) d'énergie s'appuie d'une part sur l'étrier (2) de frein et d'autre part par un premier bras ($l_1$) de levier sur une butée (A) et
c. dans lequel un mécanisme d'échange de force, ayant l'élasticité d'un ressort, est réalisé entre l'accumulateur (F1, c1) d'énergie, comme un élément (F1, C2) de ressort, et l'étrier de frein, comme autre élément (F2, c2) de ressort, par un deuxième bras ($l_2$) de levier, par l'intermédiaire de la butée (A),
d. les bras ($l_1$ et $l_2$) de levier peuvent prendre, l'un par rapport à l'autre, par rapport à la butée « A », au moins deux ou plusieurs positions angulaires différentes.

**caractérisé en ce que**

e. le point d'application du ressort accumulateur à l'étrier de frein est variable.

**2.** Dispositif de freinage suivant la revendication 1, **caractérisé en ce que** les bras ($l_1$ et $l_2$) de levier sont conçus de manière à pouvoir prendre, l'un par rapport à l'autre, dans une plage maximum donnée à l'avance, par rapport à la butée « A », n'importe quelle position angulaire.

**3.** Dispositif de freinage suivant l'une des revendications précédentes, **caractérisé en ce que** le premier bras ($l_1$) de leviers, produisant la force de serrage, est variable dans sa position angulaire par rapport à la direction de la force ($F_2$) de serrage.

**4.** Dispositif de freinage suivant l'une des revendications précédentes, **caractérisé en ce qu'**une position angulaire-pré-angle - précédant la position angulaire du deuxième bras ($l_2$) de levier, de l'autre bras de levier, est réglée.

**5.** Dispositif de freinage suivant la revendication 4, **caractérisé en ce que** le pré-angle peut être augmenté proportionnellement à l'usure de la garniture de frein, de préférence par action du système de rattrapage d'usure présent dans le frein.

**6.** Dispositif de freinage suivant l'une des revendications précédentes, **caractérisé en ce que** les forces de ressort du ressort accumulateur et de l'étrier de frein $F_1$ et $F_2$ sont des forces de ressort de compression et/ou des forces de ressort de traction.

**7.** Dispositif de freinage suivant l'une des revendications précédentes, **caractérisé en ce qu'**il est prévu un guidage linéaire de l'élément de ressort, formé par l'accumulateur d'énergie.

**8.** Dispositif de freinage suivant l'une des revendications précédentes, **caractérisé par** un piston (4) de guidage et par une transmission de force de la surface d'application d'une pression de ce piston (4) de guidage au bras (5) de levier respectif.

**9.** Dispositif de freinage suivant l'une des revendications précédentes, **caractérisé en ce que** les éléments de ressort sont articulés au bras ($l_1$, $l_2$) de levier, de manière à ce que, lorsqu'il se produit un pivotement du levier, les directions d'action des forces de ressort exécutent aussi un mouvement de pivotement.

**10.** Dispositif de freinage suivant l'une des revendications précédentes, **caractérisé en ce que**, pour le réglage d'une position de repos stable du mécanisme d'actionnement de frein, le premier bras ($l_1$) de levier est positionné autour de quelques degrés d'angle avant un point mort, dans lequel, dans le point mort ou la position morte, les axes de ressort de l'accumulateur (F1, c1) d'énergie et du premier bras ($l_1$) de levier sont en alignement.

**11.** Dispositif de freinage suivant la revendication 10, **caractérisé en ce que** le jeu du frein peut être surmonté sensiblement dès avant le dépassement de la position morte.

**12.** Dispositif de freinage suivant l'une des revendications précédentes, **caractérisé par** une constitution en frein à disque, qui a l'étrier (102) de frein, lequel comprend, par exemple dans la partie de bord de type en cadre, un disque de frein, dans lequel il est monté, comme accumulateur d'énergie, dans l'étrier de frein un ressort (101) à accumulateur, qui s'appuie, par l'une de ses extrémités, par l'intermédiaire d'un palier d'appui, sur le côté intérieur de l'étrier de frein ou d'un pot de frein, dans la partie éloignée du disque de frein, l'extrémité, tournée vers le disque de frein, ou la partie avant du ressort (101) accumulateur, étant articulée sur une articulation (105) comme point (3) d'articulation, a un levier (106) de frein pivotant comme premier bras ($l_1$) de levier.

**13.** Dispositif de freinage suivant la revendication 12, **caractérisé en ce que** le levier (106) de frein s'appuie, par un palier (106) à rouleau ou lisse, sur une paroi (108) intérieure de l'étrier (102) de frein.

**14.** Dispositif de freinage suivant la revendication 12 ou 13, **caractérisé en ce qu'**une extrémité (107) de type à excentrique du levier (106) tournant fait partie d'un excentrique (118) de déplacement, qui s'appuie sur un palier (121) d'appui appuyé sur l'étrier de frein, l'excentrique 118 de déplacement agissant par un arbre (109), comme palier à rotation, sur au moins une pièce (110) d'application d'une pression, qui pousse la garniture (117) de frein en direction du disque de frein.

**15.** Dispositif de freinage suivant l'une des revendications 12 à 14, **caractérisé en ce qu'**un entraînement de déplacement attaque le levier (106) de frein.

**16.** Dispositif de freinage suivant la revendication 15, **caractérisé en ce que** l'entraînement de déplacement a un entraînement par moteur électrique.

**17.** Dispositif de freinage suivant la revendication 15 ou 16, **caractérisé en ce que** l'entraînement de déplacement est constitué en actionneur linéaire.

**18.** Dispositif de freinage suivant l'une des revendications 14 à 17, **caractérisé en ce que** la butée A du dispositif de freinage se trouve dans l'arbre (109).

**19.** Dispositif de freinage suivant l'une des revendications 14 à 18, **caractérisé en ce que** l'agencement à excentrique du levier de frein est subdivisé en un montage (120) extérieur de levier, qui est combiné au palier (121) d'appui pour soutenir la force du ressort accumulateur lorsque le frein est à l'état non actionné et en l'excentrique (118) de déplacement intérieur - reçu dans montage en hémicoquille -

**20.** Dispositif de freinage suivant la revendication 19, **caractérisé en ce que** l'excentrique (118) de déplacement est pourvu, au moins partiellement sur son pourtour extérieur, d'une denture (119) d'encliquetage, qui est présente sous forme complémentaire également sur le pourtour intérieur de la coquille (112) de palier de levier du montage (120) de levier.

**21.** Dispositif de freinage suivant la revendication 20, **caractérisé en ce que** la denture d'encliquetage est conformée de manière à ce que l'excentrique (118) de déplacement ne puisse plus revenir en arrière en tournant lors d'actionnement du frein, mais puisse être cependant déplacée dans l'état de repos du levier de frein où une force n'est pas appliquée.

**22.** Dispositif de freinage suivant la revendication 20 ou 21, **caractérisé en ce qu'**une broche (113) de déplacement attaque l'excentrique (118) de déplacement.

**23.** Dispositif de freinage suivant la revendication 22, **caractérisé en ce que** la broche (113) de déplacement est reliée par une roue (114) d'entraînement à une transmission de rattrapage, de manière à ce que la broche (113) de déplacement déplace, vers des pré-angles plus grands, l'excentrique (118) de déplacement, au fur et à mesure qu'augmente l'usure de la garniture.

**24.** Dispositif de freinage suivant l'une des revendications 14 à 23, **caractérisé en ce qu'**une came (115) de rappel est montée sur l'excentrique (118) de déplacement.

**25.** Dispositif de freinage suivant l'une des revendications précédentes, qui a un levier (106) de déplacement ou de frein, pivotant entre deux positions d'extrémité, **caractérisé en ce que** le levier de rotation s'applique dans au moins l'une de des positions d'extrémité à une butée (128) élastique.

**26.** Dispositif de freinage suivant la revendication 25, **caractérisé en ce que** la butée élastique a un ressort (131) de butée.

**27.** Dispositif de freinage suivant la revendication 26, **caractérisé en ce que** le ressort (131) de butée est réalisé sous la forme d'un ressort à disque ou d'un ressort hélicoïdal.

**28.** Dispositif de freinage suivant la revendication 26 ou 27, **caractérisé en ce que** le ressort (131) de butée est disposé dans un pot de butée, qui est mobile entre deux positions par rapport à l'étrier de frein.

**29.** Dispositif de freinage suivant l'une des revendications 26 à 28, **caractérisé en ce que** le pot (129) de butée a un collet (132), qui est coulissant, de manière limitée, dans un espace (130) annulaire de l'étrier de frein.

**30.** Dispositif de freinage suivant l'une des revendications précédentes, **caractérisé en ce qu'**il est prévu un ou plusieurs des dispositifs suivant :

a. un dispositif de modification de la précontrainte du ressort accumulateur (Fig. 16a) ;
b. un dispositif de modification de l'angle entre un bras de levier long et court (réglage du pré-angle pour un bras de levier court) (Fig. 16b) ;
c. un dispositif de modification de la position angulaire globale du levier (décalage de la position de travail, par exemple par modification du jeu) (Fig 16c) et/ou
d. un dispositif de décalage de la butée de ressort sur le boîtier de frein ou l'étrier de frein.

**31.** Dispositif de freinage suivant la revendication 30, **caractérisé en ce qu'**au moins l'un des dispositifs a) à d) est constitué en broche de déplacement ou en excentrique de déplacement.

**32.** Procédé pour effectuer un freinage de stationnement par un frein à disque suivant la revendication 30 ou 31, **caractérisé en ce que**, pour mettre le frein de stationnement, on effectue les stades suivants :

a. actionnement du frein et pivotement du levier de frein pour le mettre en position de freinage ;
b. retrait, par un actionneur, d'un verrou réglable à l'encontre de la force d'un ressort de rappel et
c. déplacement de la butée de ressort par la force de réaction du ressort accumulateur, pour la mettre en la position de frein de stationnement.

**33.** Procédé suivant la revendication 32, **caractérisé en ce que**, pour desserrer le frein de stationnement, on effectue en outre les stades suivants :

a. rappel du levier de frein par l'actionneur de frein, pour le mettre dans une position I de repos,
b. retrait de la butée de ressort, pour la mettre dans une position de frein de service par la force de réaction du ressort accumulateur (le cas échéant, avec le soutien d'une force de rappel supplémentaire, par exemple d'un ressort de rappel) et
c. insertion du verrou par l'actionneur.

Fig. 1

**Fig. 2**

**Fig.3**

Fig. 4

Fig. 5

Fig. 6

$F_1$

$l_1$

$l_2$

„A"

$F_2$

Fig. 7

$F_2$

„A"

$F_1$

$l_2$

$l_1$

Fig. 8

Fig. 9

Fig.10

Fig. 11

Fig.12

Fig. 13

Fig. 14

Fig. 15

EP 2 005 022 B1

Fig. 16a

Fig. 16B

Fig. 16c

Fig. 16d

Fig. 17

**EP 2 005 022 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0144677 A1
- WO 03016745 A2
- EP 0094262 A1